# EUROPÄISCHE PATENTSCHRIFT

(11) **EP 2 927 540 B1**
(45) Veröffentlichungstag und Bekanntmachung des Hinweises auf die Patenterteilung: **03.10.2018**
(21) Anmeldenummer: 15156951.4
(22) Anmeldetag: 27.02.2015
(51) Int. Cl.: F16H 63/34

(54) **Parksperrensystem für ein Kraftfahrzeuggetriebe und Kraftfahrzeuggetriebe hiermit**
Parking lock system for a motor vehicle transmission and motor vehicle transmission using the same
Système de frein de stationnement pour une boîte de vitesses de véhicule et boîte de vitesses en étant équipée

(30) Priorität: 01.04.2014 DE 102014104575
(43) Veröffentlichungstag der Anmeldung: 07.10.2015
(73) Patentinhaber: GETRAG B.V. & Co. KG, 74199 Untergruppenbach (DE)
(72) Erfinder: Kristofcsak, Andras, 51375 Leverkusen (DE)
(74) Vertreter: Rausch, Gabriele

(56) Entgegenhaltungen:
- EP-A2- 1 199 234
- DE-A1- 10 105 637
- DE-A1-102010 053 505

## Beschreibung

Die vorliegende Erfindung betrifft ein Parksperrensystem für ein Kraftfahrzeuggetriebe, mit einem Gehäuse, mit einem Sperrmechanismus, der dazu ausgebildet ist, in einer Sperrposition eine Welle in Bezug auf das Gehäuse festzulegen und in einer Freigabeposition die Welle freizugeben, mit einem Betätigungsmechanismus zum Betätigen des Sperrmechanismus, wobei der Betätigungsmechanismus einen um eine gehäusefeste Betätigungsachse zwischen einer Sperrwinkelposition und einer Freigabewinkelposition verschwenkbaren Betätigungshebel aufweist, der mit dem Sperrmechanismus zwangsgekoppelt ist, und wobei der Betätigungshebel in Richtung der Sperrwinkelposition vorgespannt ist, wobei ein Aktuatorglied mittels eines Aktuators in einer Betätigungsrichtung zwischen einer Halteposition, in der das Aktuatorglied den Betätigungshebel in der Freigabewinkelposition hält, und einer Betätigungsposition, in der der Betätigungshebel dem Aktuatorglied folgt, bewegbar ist.

Ferner betrifft die vorliegende Erfindung ein Kraftfahrzeuggetriebe mit einem solchen Parksperrensystem.

Parksperrenanordnungen der oben genannten Art sind allgemein bekannt. Diese dienen dazu, in einem Kraftfahrzeuggetriebe, insbesondere in einem automatisierten Kraftfahrzeuggetriebe, das Fahrzeug zu immobilisieren. Die Welle ist dabei vorzugsweise eine Ausgangswelle des Getriebes, die in unmittelbarer Wirkverbindung mit angetriebenen Rädern des Kraftfahrzeuges steht. In der Sperrposition wird ein Verdrehen der Welle verhindert und folglich ein Wegrollen des Fahrzeugs ausgeschlossen.

Ferner ist eine Vielzahl von Sperrmechanismen bekannt. In einer Ausführungsform ist an dem Gehäuse ein Ziehkeil axial verschieblich gelagert, der eine Parksperrenklinke in einer Freigabeposition freigibt und zum Einrichten der Sperrposition zwischen einen Gehäuseabschnitt und einen Betätigungsabschnitt der Parksperrenklinke gezogen wird, um auf diese Weise eine in Bezug auf das Gehäuse formschlüssige Sperrposition für die Parksperrenklinke zu realisieren, wobei ein Klinkenzahn der Parksperrenklinke in eine Parksperrenverzahnung eines Parksperrenrades eingreift, das mit der Welle drehfest verbunden ist.

Für Situationen, bei denen während dieses Betätigungsvorganges der Klinkenzahn auf einem Zahn der Parksperrenverzahnung aufliegt, kann der Sperrmechanismus mit einer sogenannten Einrückfeder ausgestattet sein, die für diesen Fall gespannt wird, so dass das Sperrglied (Ziehkeil) aufgrund der in der Einrückfeder gespeicherten Energie die Parksperrenklinke in die Sperrposition versetzt, sobald das Parksperrenrad sich verdreht (beispielsweise aufgrund eines Rollens des Fahrzeugs).

Weitere bekannte Sperrmechanismen sind in Form von Nockenelementen ausgebildet, die an einer parallel zur Klinkenachse angeordneten Welle festgelegt sind.

Der Betätigungsmechanismus kann eine Schnittstelle zu einem manuellen Ganghebel im Innenraum des Kraftfahrzeuggetriebes aufweisen, so dass bei dessen Versetzen in eine Position "P" das Parksperrensystem betätigt wird. Andererseits ist es auch bekannt, den Betätigungsmechanismus mit einem Aktuator auszustatten oder diesen von einem Aktuator antreiben zu lassen, um ein sogenanntes "park-by-wire"-Parksperrensystem zu realisieren. Die Aktuatoren können hydraulische Aktuatoren sein, können jedoch auch elektromechanische Aktuatoren wie Schaltwalzen beinhalten.

Parksperrenanordnungen unterliegen in der Regel engen Vorgaben hinsichtlich des Bauraumes. Ferner werden Kraftfahrzeuggetriebe mit derartigen Parksperrensystemen häufig in verschiedenen Varianten angeboten, beispielsweise als manuell schaltbare Getriebe, als automatisierte Schaltgetriebe oder als Doppelkupplungsgetriebe. Auch kann die Anzahl der Gangstufen von Getriebevariante zu Getriebevariante variieren. In der Regel ist dabei für jede Variante des Kraftfahrzeuggetriebes ein eigenes Parksperrensystem vorgesehen, das an die Gegebenheiten im Innenraum des Kraftfahrzeuggetriebegehäuses angepasst ist.

Bei Parksperrensystemen, die aktuatorbetätigt sind, können ferner folgende Probleme auftreten: Zum einen kann bei Ausfall des Aktuators dazu kommen, dass trotz eines Parksperrenwunsches die Parksperre nicht eingelegt werden kann. In diesem Fall ist es möglich, dass das Fahrzeug nicht sicher abgestellt werden kann. Die Funktionsunfähigkeit des Aktuators kann in manchen Fällen daher rühren, dass eine zum Betätigen der Parksperrenanordnung verwendete Schaltwalze bei einer Drehbewegung in Richtung der Parksperrendrehposition hängen bleibt, beispielsweise aufgrund der Tatsache, dass eine auf dem Weg in die Parksperrenposition einzulegende Gangstufe sich aufgrund eines sogenannten "Einlegehängers" nicht einlegen lässt (hierbei stehen beispielsweise Verzahnungen der zugeordneten Schaltkupplung dieser Gangstufe aufeinander, so dass die Schaltkupplung nicht geschlossen werden kann.)

In anderen Fällen befindet sich der Sperrmechanismus eines solchen "park-by-wire"-Parksperrensystems in einer Sperrposition, und aufgrund eines Aktuatorfehlers oder dergleichen lässt sich die Freigabeposition nicht einlegen, so dass ein Fahrerwunsch nach einem Wegfahren des Fahrzeugs nicht erfüllt werden kann.

Aus dem Dokument DE 10 2010 053 505 A1 ist eine Vorrichtung zur Notbetätigung einer Parksperre bekannt. Hierbei ist eine Verstelleinheit vorgesehen, die elektrisch ansteuerbar ist und mit der im Normalbetrieb ein Steuerelement der Parksperre innerhalb eines Stellweges zwischen einer ersten Steuerstellung und einer zweiten Steuerstellung verstellbar ist. Ferner beinhaltet die Vorrichtung eine Notbetätigung, mit der in einem Notbetrieb das Steuerelement in einer Betätigungsrichtung von der ersten Steuerstellung in die zweite Steuerstellung bringbar ist. Im Notbetrieb ist dabei der Stellweg des Steuerelementes um einen Zusatzweg erweitert, über den das Steuerelement unter Aufrechterhaltung der Betätigungsrichtung von der zweiten Steuerstellung in eine dritte Steuerstellung bringbar ist, in der das Sperrelement von der zweiten Parksperrenposition wieder in die erste Parksperrenposition überführbar ist.

Bei dieser Ausführungsform ist ein Ziehkeil des Sperrmechanismus mit einer ersten Keilfläche zum Einrichten der Sperrposition und mit einer axial versetzten Freigabe-Keilfläche ausgestattet, mit der die Freigabeposition mittels der Notbetätigung einrichtbar ist. Die Parksperre ist jedoch sehr komplex und erfordert zudem, dass sich Elemente des Parksperrensystems außerhalb der Betätigungsbereiche bewegen lassen, die für den Normalbetrieb eingerichtet sind. Das bekannte Parksperrensystem kann nicht beliebig oft gesperrt und entsperrt werden. Ferner sind die Notbetätigungskräfte konstruktionsbedingt hoch.

Weiterhin ist aus der DE 101 05 637 A1, welche alle Merkmale des Oberbegriffs des Anspruchs 1 offenbart, eine Parksperrvorrichtung, insbesondere für ein mit einem automatisiert steuerbaren Getriebe versehenes Kraftfahrzeug bekannt. Die Parksperrenvorrichtung weist eine Betätigungsvorrichtung auf, die ein Betätigungselement zur Betätigung einer Parksperre, einen Federspeicher zur Aktivierung der Parksperre, einen steuerbaren Stellantrieb zur Deaktivierung der Parksperre, und eine Sperrvorrichtung zur Arretierung der Parksperre im deaktivierten Zustand umfasst. Der Stellantrieb ist elektromechanisch wirksam ausgebildet. Ein Hauptbetätigungshebel ist vorgesehen, über den der Federspeicher, der Stellantrieb, und die Sperrvorrichtung mit dem Betätigungselement in Verbindung stehen bzw. in Wirkverbindung bringbar sind.

Aus der EP 1 199 234 A2 geht eine Notentriegelung für eine Parksperre eines Motorfahrzeugs hervor. Das Getriebe zum Parken wird von einem Hebel,

einen Nocken und einem Nockenfolger verriegelt, der in eine ausgerückte Position durch einen Kolben gebracht wird. Dieser wird niedergedrückt durch einen Hebel, der durch das Kupplungspedal und einen einstellbare Bowdenzug betätigt wird.

Vor dem obigen Hintergrund ist es eine Aufgabe der Erfindung, ein verbessertes Parksperrensystem sowie ein verbessertes Kraftfahrzeuggetriebe anzugeben, mit denen wenigstens einer der oben genannten Nachteile vermieden wird oder gelindert werden kann.

Die obige Aufgabe wird mit einem Parksperrensystem für ein Kraftfahrzeuggetriebe gemäß dem Anspruch 1 gelöst. Das Parksperrensystem ermöglicht hierbei, den Betätigungshebel in der Koppelposition in einem Normalbetrieb entweder in die Freigabewinkelposition zu versetzen, wodurch der Sperrmechanismus in die Freigabeposition versetzt wird, oder den Betätigungshebel in die Sperrwinkelposition zu versetzen, um den Sperrmechanismus in die Sperrposition zu bringen. Dadurch, dass der Betätigungshebel in Richtung der Sperrwinkelposition vorgespannt ist, muss das Aktuatorglied den Betätigungshebel in der Freigabeposition folglich halten und weicht dem Betätigungshebel in der Betätigungsrichtung aus, wenn es in die Betätigungsposition versetzt wird, so dass der Betätigungshebel durch die Wirkung der Vorspannung in die Sperrwinkelposition versetzt wird. Das Aktuatorglied befindet sich in der Koppelposition generell immer in Anlage an dem Betätigungshebel.

Zum anderen ist es möglich, das Aktuatorglied von der Koppelposition in eine Entkoppelposition zu bewegen, in der das Aktuatorglied von dem Betätigungshebel entkoppelt ist.

Mit anderen Worten führt ein Überführen des Aktuatorgliedes in die Entkoppelposition unmittelbar dazu, dass der Betätigungshebel durch die Vorspannung in Richtung der Sperrwinkelposition versetzt wird, um auf diese Weise den Sperrmechanismus in die Sperrposition zu versetzen.

Diese Ausgestaltung ermöglicht zum einen eine Notverriegelung des Parksperrensystems für den Fall, dass sich das Aktuatorglied mittels des Aktuators nicht in die Betätigungsposition versetzen lässt. Ferner ermöglicht diese Ausgestaltung, in manchen Varianten des Parksperrensystems auch eine Notentriegelung vorzusehen, wie nachstehend noch beschrieben werden wird.

Das Gehäuse des Parksperrensystems ist vorzugsweise ein Getriebegehäuse des Kraftfahrzeuggetriebes. Die Zwangskopplung zwischen dem Betätigungshebel und dem Sperrmechanismus kann eine Einrückfeder beinhalten, wie sie eingangs beschrieben worden ist, um für den Fall eines Versetzens des Betätigungsmechanismus in die Sperrwinkelposition bei einer Situation Klinkenzahn auf Parksperrenradzahn dennoch ein mechanisch sicheres Überführen des Sperrmechanismus in die Sperrposition zu ermöglichen, wenn das Fahrzeug zu rollen beginnt.

Die Vorspannung des Betätigungshebels in Richtung der Sperrwinkelposition erfolgt vorzugsweise über eine mechanische Feder. Der Betätigungshebel kann dabei direkt oder indirekt vorgespannt sein, so dass eine Feder entweder direkt an dem Betätigungshebel angreift oder an einem mit dem Betätigungshebel zwangsgekoppelten Koppelglied.

Die Aufgabe wird somit vollkommen gelöst.

In einer bevorzugten Ausführungsform ist das Aktuatorglied mittels eines Nothebels von der Koppelposition in die Entkoppelposition bewegbar, indem der Nothebel von einer Neutralposition in eine Notsperrposition verschwenkt wird.

Mit anderen Worten kann das Aktuatorglied durch mechanischen Eingriff in die Entkoppelposition versetzt werden. Der Nothebel kann beispielsweise mit einem Notbetätigungsmechanismus gekoppelt sein, der außerhalb des Gehäuses des Kraftfahrzeuggetriebes manuell von einem Fahrer in einer Notsituation betätigbar ist. Durch das Überführen des Nothebels in die Notsperrposition wird folglich das Aktuatorglied in die Entkoppelposition bewegt, wodurch der Betätigungshebel durch die Vorspannung in Richtung der Sperrwinkelposition versetzt wird, um auf diese Weise den Sperrmechanismus in die Sperrposition zu versetzen.

Gemäß einer weiteren bevorzugten Ausführungsform ist ein Nothebel mit dem Betätigungshebel über eine Mitnehmereinrichtung gekoppelt, derart, dass der Betätigungshebel von dem Nothebel in die Freigabewinkelposition bewegbar ist, indem der Nothebel von einer Neutralposition in eine Notfreigabeposition verschwenkt wird.

Bei dieser Variante ist es auch dann, wenn das Aktuatorglied sich in der Entkoppelposition befindet, möglich, den Betätigungshebel aus der Sperrwinkelposition in die Freigabewinkelposition zu versetzen, in dem ein mechanisch betätigbarer Hebel (der wie bei der obigen Variante außerhalb des Kraftfahrzeuggetriebes angeordnet sein kann) in eine Notfreigabeposition verschwenkt wird.

Hierdurch ist es möglich, in einer Notsituation den Sperrmechanismus über eine Notfreigabe in die Freigabeposition zu versetzen.

In einer bevorzugten Variante weist der Nothebel eine Neutralposition sowie eine Notsperrposition und eine Notfreigabeposition auf, so dass sowohl eine Notentriegelung als auch eine Notverriegelung des Parksperrensystems möglich ist, wobei die Notsperrposition und die Notfreigabeposition aus der Neutralposition vorzugsweise in entgegengesetzte Richtungen erreichbar sind.

Dabei werden diese Funktionen mit dem gleichen Stellweg des Betätigungshebels und eines Koppelgliedes zwischen dem Sperrmechanismus und dem Betätigungsmechanismus erzielt. Eine Erweiterung des Stellweges wie im Stand der Technik ist folglich nicht erforderlich.

Gemäß einer weiteren bevorzugten Ausführungsform ist der Nothebel um die Betätigungsachse verschwenkbar.

Der Nothebel ist dabei innerhalb des Kraftfahrzeuggetriebes angeordnet und koaxial zu dem Betätigungshebel um die Betätigungsachse verschwenkbar. Hierdurch kann sowohl das Bewegen des Aktuatorgliedes mittels des Nothebels in die Entkoppelposition konstruktiv einfach realisiert werden. Ferner ist es auf einfache Weise möglich, eine Mitnehmereinrichtung vorzusehen, die den Nothebel und den Betätigungshebel koppelt, um den Betätigungshebel von dem Nothebel in die Freigabewinkelposition bewegen zu können.

Gemäß einer weiteren bevorzugten Ausführungsform ist der Nothebel über eine Gehäuseöffnung mit einem Schnittstellenhebel verbunden, der an der Außenseite des Gehäuses mit einem Notbetätigungsmechanismus verbindbar ist.

Von besonderem Vorzug ist es dabei, wenn sich die Betätigungsachse, um die der Nothebel und der Betätigungshebel vorzugsweise verschwenkbar sind, sich durch die Gehäuseöffnung hindurch erstreckt.

Hierbei ist eine mechanische Verbindung zwischen dem Nothebel im Inneren des Getriebegehäuses und einem Schnittstellenhebel an der Außenseite des Gehäuses auf konstruktiv einfache Weise realisierbar.

Ferner ist es insgesamt vorteilhaft, wenn das Aktuatorglied mittels eines Elektromagnetaktuators von der Koppelposition in die Entkoppelposition bewegbar ist.

Ein solcher Elektromagnetaktuator kann über eine Steuereinrichtung angesteuert werden, beispielsweise eine Getriebesteuerung. Der Elektromagnetaktuator kann alternativ oder zusätzlich zu der Maßnahme vorgesehen sein, dass sich das Aktuatorglied mittels eines Nothebels von der Koppelposition in die Entkoppelposition bewegen lässt.

Sofern sowohl der Elektromagnetaktuator als auch der Nothebel das Aktuatorglied von der Koppelposition in die Entkoppelposition bewegen können, wird eine höchstmögliche Sicherheit erzielt. In vielen Fällen wird es hinreichend sein, den Elektromagnetaktuator anzusteuern, wenn sich das Aktuatorglied nicht mittels des Aktuators in die Betätigungsposition bewegen lässt. In manchen Fällen, beispielsweise bei einem Ausfall des Steuergerätes, kann jedoch auch der Elektromagnetaktuator ausfallen. In diesem Fall kann über den mechanisch betätigten Nothebel in jedem Fall die Sperrposition des Sperrmechanismus erzielt werden, so dass vermieden werden kann, dass das Fahrzeug wegrollt, auch wenn ein vollständiger Elektronikausfall vorliegt, der beispielsweise auch eine aktuatorisch betätigte Handbremsenfunktion außer Kraft setzen könnte.

Der Elektromagnetaktuator ist vorzugsweise gehäusefest gelagert und weist einen Anker auf, der in der Koppelrichtung auf das Aktuatorglied einwirken kann, um dieses von der Koppelposition in die Entkoppelposition zu bewegen.

Gemäß einer weiteren insgesamt bevorzugten Ausführungsform ist das Aktuatorglied in die Koppelposition vorgespannt.

Zu diesem Zweck ist vorzugsweise eine Federeinrichtung vorgesehen, deren Wirkrichtung vorzugsweise quer zu der Wirkrichtung einer Federeinrichtung verläuft, mittels der der Betätigungshebel in Richtung der Sperrwinkelposition vorgespannt ist.

Durch diese Maßnahme ist es möglich, das Aktuatorglied ohne weiteren Eingriff in die Koppelposition zu versetzen, sobald nach einem Aktuatorfehler der Aktuator das Aktuatorglied wieder in die Betätigungsposition versetzen kann. Vorzugsweise ist vorgesehen, dass sich das Aktuatorglied in der Betätigungsposition mittels der Vorspannung mechanisch automatisch in die Koppelposition zurückversetzt, um das Parksperrensystem wieder in einen Normalzustand zu bringen.

Vorzugsweise ist der Aktuator dazu ausgebildet, ein Drehglied um eine Drehachse zu verschwenken, wobei das Aktuatorglied mit dem Drehglied drehgekoppelt ist und einen Betätigungsabschnitt aufweist, der in der Koppelposition an dem Betätigungshebel anliegt.

Der Betätigungsabschnitt ist vorzugsweise so ausgebildet, dass er unabhängig von der Drehposition des Drehgliedes immer an dem Betätigungshebel anliegt, wenn er sich in der Koppelposition befindet.

Die Drehachse ist vorzugsweise eine gehäusefeste Achse und ist vorzugsweise parallel zu einer Achse der Welle ausgerichtet, mit der ein Parksperrenrad des Sperrmechanismus verbunden ist. Die Drehachse ist vorzugsweise quer zu der Betätigungsachse, um die der Betätigungshebel verschwenkbar ist.

Ferner ist es bei dieser Ausführungsform vorteilhaft, wenn das Aktuatorglied an dem Drehglied um eine Koppelschwenkachse verschwenkbar gelagert ist, die windschief zu der Drehachse des Drehgliedes ausgerichtet ist.

Diese Konstruktion ermöglicht es, das Aktuatorglied sowohl in Betätigungsrichtung zu bewegen, indem das Drehglied verdreht wird, als auch in der Koppelrichtung zu bewegen, indem das Aktuatorglied um die Koppelschwenkachse verschwenkt wird.

Der Betätigungshebel weist vorzugsweise eine parallel zu der Betätigungsrichtung ausgerichtete Ausnehmung auf, in die das Aktuatorglied in der Entkoppelposition eingreift, wenn der Betätigungshebel durch die mechanische Vorspannung in Richtung der Sperrwinkelposition bewegt wird.

Der Aktuator kann das Drehglied auf verschiedene Weise in Drehrichtung versetzen.

Von besonderem Vorzug ist es jedoch, wenn der Aktuator eine Schaltwalze aufweist, die eine Parksperrenkontur aufweist, in die ein Konturfolger eingreift, der mit dem Aktuatorglied gekoppelt ist.

Die Schaltwalze weist dabei vorzugsweise wenigstens eine Schaltkontur zum Ein- und Auslegen wenigstens einer Gangstufe des Kraftfahrzeuggetriebes auf.

Die Parksperrenkontur kann an einem Umfangsabschnitt der Schaltwalze ausgebildet sein, kann jedoch vorzugsweise auch an einer Stirnseite der Schaltwalze ausgebildet sein.

Der Konturfolger kann insbesondere starr mit dem Drehglied verbunden sein, um den Konturfolger mit dem Aktuatorglied in der Betätigungsrichtung zu koppeln.

Dabei ist es folglich vorteilhaft, wenn der Konturfolger an dem Drehglied ausgebildet ist, das um eine Drehachse verschwenkbar ist und an dem das Aktuatorglied gelagert ist.

Die obige Aufgabe wird ferner gelöst durch ein Kraftfahrzeuggetriebe mit einem Parksperrensystem der oben beschriebenen Art.

Ferner wird die obige Aufgabe gelöst durch ein modulares Kraftfahrzeuggetriebe mit einem Parksperrensystem der erfindungsgemäßen Art, wobei das Kraftfahrzeuggetriebe ein Getriebegehäuse aufweist, innerhalb dessen die Welle des Parksperrensystems gelagert ist, wobei ein Betätigungshebel in Nachbarschaft zu einer Innenseite des Getriebegehäuses angeordnet und um eine Betätigungsachse verschwenkbar ist, wobei das Getriebegehäuse eine Gehäuseöffnung aufweist, durch die sich die Betätigungsachse erstreckt, derart, dass der Betätigungshebel in einer Variante des Kraftfahrzeuggetriebes über die Gehäuseöffnung mit einem Schnittstellenhebel verbunden ist, der an der Außenseite des Getriebegehäuses mit einem handbetätigten Schalthebel verbunden ist, und derart, dass der Betätigungshebel in einer weiteren Variante mit einem um die Betätigungsachse verdrehbaren Nothebel gekoppelt ist, der über die Gehäuseöffnung mit einem Schnittstellenhebel verbunden ist, der an der Außenseite des Getriebegehäuses mit einem Notbetätigungsmechanismus verbunden ist.

Das Parksperrensystem kann folglich modular aufgebaut werden, um hierdurch eine Anpassung an unterschiedliche Varianten eines Kraftfahrzeuggetriebes zu realisieren.

Das Kraftfahrzeuggetriebe kann in einer Variante dazu ausgebildet sein, das Parksperrensystem manuell über einen Gangschalthebel im Kraftfahrzeugfahrgastraum zu betätigen. Hierbei wird der Schalthebel, der typischerweise Positionen P, R, N, D beinhaltet, mechanisch mit dem Schnittstellenhebel verbunden, der dann wiederum über die Gehäuseöffnung mit dem Betätigungshebel verbunden ist. Bei dieser Variante ist es nicht notwendig, einen Nothebel vorzusehen, da es sich bei einem solchen Parksperrensystem nicht um ein "park-by-wire"-System handelt.

Falls das Kraftfahrzeuggetriebe jedoch mit einem "park-by-wire"-Parksperrensystem ausgestattet werden soll, wird zusätzlich zu dem Betätigungshebel der Nothebel an der Betätigungsachse angeordnet und über die Gehäuseöffnung mit einem Schnittstellenhebel verbunden, der an der Außenseite des Getriebegehäuses mit einem Notbetätigungsmechanismus verbunden ist.

Alternativ oder zusätzlich hierzu kann auch der Elektromagnetaktuator vorgesehen sein, der das Aktuatorglied von der Koppelposition in die Entkoppelposition bewegen kann.

Bei der "park-by-wire"-Variante ist folglich vorzugsweise vorgesehen, dass die Schaltwalze eine Parksperrenkontur aufweist und ein Drehglied zusätzlich vorgesehen ist, das mit dem Aktuatorglied gekoppelt ist. Diese Elemente sind bei einem herkömmlichen rein mechanisch betätigten Parksperrensystem nicht erforderlich.

Nichtsdestotrotz kann das Grundlayout des Parksperrensystems für sämtliche Varianten des Kraftfahrzeuges identisch sein, so dass sich erhebliche Kosten hinsichtlich der Bauteilvielfalt und insbesondere der Gehäusevielfalt ergeben. Insbesondere ist es möglich, das gleiche oder nur wenig abgewandelte Getriebegehäuse für sämtliche Varianten des Kraftfahrzeuggetriebes zu verwenden, da entweder die mechanische Schaltbetätigung oder die Notbetätigung über die Gehäuseöffnung erfolgen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: in schematischer Form einen Antriebsstrang für ein Kraftfahrzeug mit einer Ausführungsform eines erfindungsgemäßen Parksperrensystems;
- Fig. 2: eine Seitenansicht einer weiteren Ausführungsform eines erfindungsgemäßen Parksperrensystems;
- Fig. 3: eine perspektivische Ansicht einer weiteren Ausführungsform eines erfindungsgemäßen Parksperrensystems;
- Fig. 4: eine perspektivische Ansicht des Parksperrensystems der Fig. 3 in einer Freigabeposition;
- Fig. 5: eine der Fig. 4 vergleichbare Ansicht des Parksperrensystems in einer Sperrposition;
- Fig. 6: eine weitere perspektivische Ansicht des Parksperrensystems der Fig. 3 zur Darstellung der Koppelposition zwischen Aktuatorglied und Betätigungshebel;
- Fig. 7: eine Draufsicht auf das Parksperrensystem der Fig. 3 mit dem Aktuatorglied in Koppelposition und in Betätigungsposition;
- Fig. 8: eine der Fig. 6 vergleichbare Ansicht mit dem Aktuatorglied in der Entkoppelposition;
- Fig. 9: eine der Fig. 7 vergleichbare Ansicht mit dem Aktuatorglied in der Entkoppelposition;
- Fig. 10: eine perspektivische Teilansicht des Parksperrensystems der Fig. 3 zur Darstellung eines Notbetätigungssystems mit einem Nothebel in einer Neutralposition;
- Fig. 11: das Versetzen des Nothebels von der Neutralposition in Richtung einer Notsperrposition;
- Fig. 12: eine der Fig. 10 und 11 vergleichbare Darstellung des Nothebels in der Notsperrposition;
- Fig. 13: eine der Fig. 10 entsprechende Darstellung vor Einleiten eines Notentriegelungsvorganges;
- Fig. 14: eine der Fig. 13 vergleichbare Darstellung beim Durchführen eines Notentriegelungsvorganges;
- Fig. 15: eine der Fig. 13 und 14 entsprechende Darstellung des Parksperrensystems mit dem Nothebel in der Notfreigabeposition;
- Fig. 16: eine schematische Ansicht in das Innere einer Hälfte eines Getriebegehäuses mit einer Darstellung der alternativen Anbindung eines Schnittstellenhebels an der Außenseite des Getriebes entweder an einen Schalthebel oder an einen Notbetätigungsmechanismus, und
- Fig. 17: eine schematische Darstellung einer weiteren Hälfte des Gehäuses, das auf das in Fig. 16 gezeigte Gehäuseteil aufgesetzt werden kann.

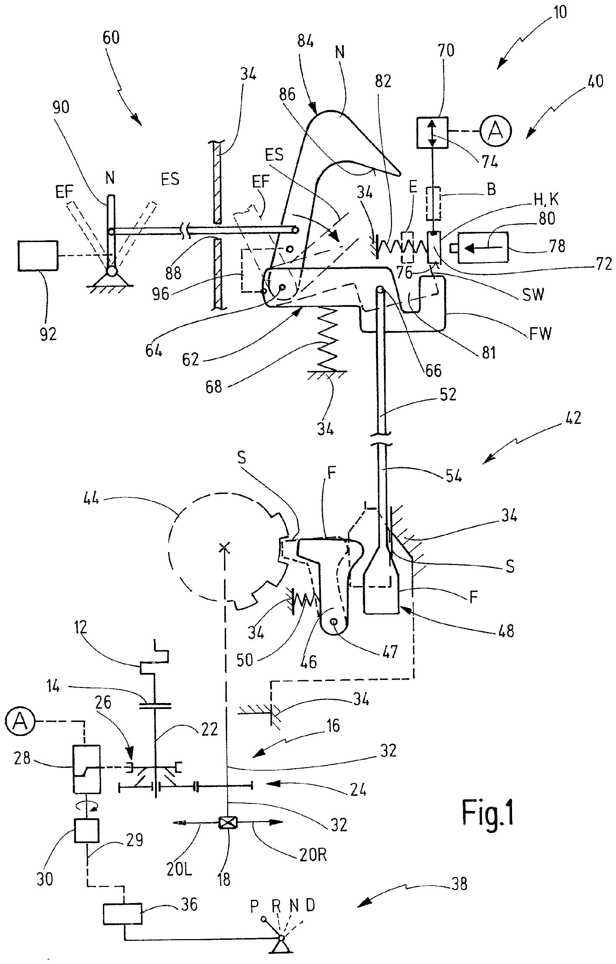

In Fig. 1 ist ein Antrieb für ein Kraftfahrzeug dargestellt und generell mit 10 bezeichnet. Der Antriebsstrang 10 weist einen Antriebsmotor 12 wie einen Verbrennungsmotor oder einen Hybrid-Antriebsmotor auf. Ferner beinhaltet der Antriebsstrang 10 eine Kupplungseinrichtung 14, die eingangsseitig mit dem Antriebsmotor 12 verbunden ist und die ausgangsseitig mit einem Stufengetriebe 16 verbunden ist. Ein Ausgangsstufengetriebe 16 ist mit einem Differential 18 verbunden, mittels dessen Antriebsleistung auf angetriebene Räder 20L, 20R verteilbar ist.

Das Stufengetriebe 16 weist eine Eingangswelle 22 auf, an der ein Losrad eines Radsatzes 24 drehbar gelagert ist. Eine Schaltkupplungsanordnung 26 dient zum Verbinden des Losrades mit der Eingangswelle 22 oder zum Trennen des Losrades von der Eingangswelle 22. Die Schaltkupplungsanordnung 22 wird mittels einer Schaltwalze 28 betätigt, die um eine Drehachse 29 verdrehbar ist. Ein Schaltwalzenantrieb 30, beispielsweise in Form eines Elektromotors, dient dazu, die Schaltwalze 28 in beiden Drehrichtungen anzutreiben.

Der Radsatz 24 weist ferner ein Festrad auf, das mit einer Ausgangswelle 32 verbunden ist. Das Stufengetriebe 16 beinhaltet ferner ein Getriebegehäuse 34 und ist vorzugsweise als automatisiertes Getriebe, beispielsweise in Form eines automatisierten Schaltgetriebes oder eines Doppelkupplungsgetriebes, mittels einer Steuereinrichtung 36 betätigbar. Insbesondere ist die Steuereinrichtung 36 mit dem Schaltwalzenantrieb 30 gekoppelt. Ferner ist die Steuereinrichtung 36 mit einem Schalthebel 38 gekoppelt, der in Positionen P, R, N, D versetzbar ist. Je nach Stellung des Schalthebels 38 wird die Schaltwalze 28 verdreht, um beispielsweise eine Rückwärtsgangstufe oder eine Vorwärtsgangstufe einzulegen.

Das Stufengetriebe 16 weist ferner ein Parksperrensystem 40 auf. Das Parksperrensystem 40 beinhaltet einen Sperrmechanismus 42, der ein Parksperrenrad 44 beinhaltet, das an der Ausgangswelle 32 drehfest festgelegt ist. Ferner weist der Sperrmechanismus 42 eine Parksperrenklinke 46 auf, die um eine gehäusefeste Klinkenachse 47 verschwenkbar ist, und zwar zwischen einer Freigabeposition F, in der die Parksperrenklinke 46 das Parksperrenrad 44 freigibt, und einer Sperrposition S (gestrichelt dargestellt), in der ein Zahn der Parksperrenklinke 46 in eine Zahnlücke des Parksperrenrades 44 greift, um die damit verbundene Welle 32 gegenüber dem Gehäuse festzulegen und folglich das mit dem Antriebsstrang 10 ausgestattete Kraftfahrzeug zu immobilisieren.

Der Sperrmechanismus 42 beinhaltet ferner eine Keil- oder Nockenanordnung 48. Vorliegend ist ein Ziehkeil gezeigt, der zwischen einen Betätigungsabschnitt der Parksperrenklinke 46 und einen Gehäuseabschnitt ziehbar ist, um die Parksperrenklinke 46 in die Sperrposition S zu versetzen. Für die Freigabeposition F kann eine Halteeinrichtung 50 vorgesehen sein, beispielsweise in der Form einer Feder oder in der Form einer formschlüssigen Halteeinrichtung. Der Sperrmechanismus 42 ist über ein Koppelglied 52, beispielsweise in Form einer Schubstange, betätigbar. Das Koppelglied 52 kann mit der Keil- oder Nockenanordnung 48 über eine Einrückfeder 54 verbunden sein, wie es im Stand der Technik bekannt ist.

Das Parksperrensystem 40 beinhaltet ferner einen Betätigungsmechanismus 60. Der Parksperrenmechanismus 60 weist einen Betätigungshebel 62 auf, der um eine Betätigungsachse 64 verschwenkbar ist. Der Betätigungshebel 62 ist über eine Gelenkkopplung 66 mit dem Koppelglied 52 gekoppelt, so dass der Betätigungshebel 62 mit dem Sperrmechanismus 42 zwangsgekoppelt ist (abgesehen von der Einrückfeder 54).

Der Betätigungshebel 62 ist zwischen einer Freigabewinkelposition FW und einer Sperrwinkelposition SW schwenkbar um die Betätigungsachse 64 gelagert. In der Freigabewinkelposition FW befindet sich der Sperrmechanismus 42 in der Freigabeposition F. In der Sperrwinkelposition SW (in Fig. 1 gestrichelt dargestellt) befindet sich der Sperrmechanismus 42 in der Sperrposition S.

Der Betätigungshebel 62 ist mittels einer Vorspannfeder 68 in die Sperrwinkelposition SW vorgespannt, wobei sich die Vorspannfeder 68 beispielsweise an dem Gehäuse 34 abstützen kann.

Der Betätigungsmechanismus 60 weist ferner einen Betätigungsaktuator 70 auf, bei dem es sich, wie durch Kreise A angedeutet, um die Schaltwalzenanordnung mit der Schaltwalze 28 und dem Schaltwalzenantrieb 30 handeln kann. Der Betätigungsaktuator 70 ist dazu ausgelegt, ein Aktuatorglied 72 zwischen einer Halteposition H und einer Betätigungsposition B zu bewegen, wobei dies in einer Betätigungsrichtung 74 erfolgt, die vorzugsweise tangential zu der Drehbewegung des Betätigungshebels 62 ausgerichtet ist. Das Aktuatorglied 72 weist einen Betätigungsabschnitt 76 auf, gegen den der Betätigungshebel 62 durch die Vorspannfeder 68 gedrückt wird, wenn sich das Aktuatorglied 72 in der Halteposition H befindet. Wenn das Aktuatorglied 72 in die Betätigungsposition B versetzt wird (in Fig. 1 gestrichelt dargestellt), folgt der Betätigungshebel 62 dem Aktuatorglied 72, und zwar aufgrund der Wirkung der Vorspannfeder 68. Folglich kann mittels des Betätigungsaktuators 70 der Sperrmechanismus 42 in die Sperrposition S versetzt werden. Umgekehrt kann der Betätigungsaktuator 70 das Aktuatorglied 72 auch von der Betätigungsposition B in die Halteposition H versetzen, wodurch der Betätigungshebel 62 so verschwenkt wird (gegen die Kraft der Vorspannfeder 68), so dass der Sperrmechanismus 42 in die Freigabeposition F versetzt wird.

Diese Art der aktuatorischen Betätigung des Parksperrensystems 40 ist für den sogenannten Normalbetrieb vorgesehen, wenn also kein Fehlerzustand vorliegt.

Das Parksperrensystem 40 weist ferner einen Koppelaktuator 78 auf. Der Koppelaktuator 78 ist dazu ausgelegt, das Aktuatorglied 72 in einer Koppelrichtung 80 zu bewegen, die quer zu der Betätigungsrichtung 74 ausgerichtet ist. Genauer gesagt kann der Koppelaktuator 78 das Aktuatorglied 72 von der Halteposition H, die auch als Koppelposition K bezeichnet wird, in eine Entkoppelposition E bewegen, die in Fig. 1 gestrichelt dargestellt ist. Das Aktuatorglied 72 ist mittels einer Koppelvorspannfeder 82 in die Koppelposition K vorgespannt, so dass sich das Aktuatorglied 72 bei unbetätigtem Koppelaktuator 78 in der Koppelposition befindet und folglich zwischen der Halteposition H und der Betätigungsposition B bewegbar ist.

Wenn der Betätigungsaktuator 70 nicht dazu in der Lage ist, das Aktuatorglied 72 von der Halteposition H in die Betätigungsposition B zu versetzen, kann eine Notverriegelung des Parksperrensystems 40 eingeleitet werden, indem der Koppelaktuator 78 eingeschaltet wird. Der Koppelaktuator 78 ist vorzugsweise ein Elektromagnetaktuator, der zu diesem Zweck geeignet bestromt wird, insbesondere mittels der Steuereinrichtung 36.

Hierdurch wird das Aktuatorglied 72 von der Halteposition H bzw. Koppelposition K in die Entkoppelposition E versetzt, in der das Aktuatorglied 72 von dem Betätigungshebel 62 entkoppelt ist. Zu diesem Zweck kann in dem Betätigungshebel 62 eine Ausnehmung vorgesehen sein, wie es in Fig. 1 bei 81 gezeigt ist. Das Aktuatorglied 72 wird bei der Bewegung des Betätigungshebels 62 aufgrund der Vorspannfeder 68 in die Ausnehmung 81 eingeführt, behindert also die Bewegung des Betätigungshebels 62 auf dem Weg in die Sperrwinkelposition SW nicht.

Der Koppelaktuator 78 kann auch für andere Zwecke verwendet werden. Beispielsweise kann es vorteilhaft sein, den Koppelaktuator 78 in einem Park-By-Wire-System primär bzw. vorrangig zu betätigen. Dies kann insbesondere dann sinnvoll sein, wenn der Betätigungsaktuator 70 relativ langsam arbeitet, wie beispielsweise ein Schaltwalzenaktuator, der vor Erreichen einer Position P in manchen Fällen noch wenigstens einen Gang schalten muss (beispielsweise über R), wobei dann die Synchronisierung blockieren kann. Durch die Maßnahme den Koppelaktuator 78 primär bzw. immer zu betätigen, kann ein schnellstmögliches Erreichen der Sperrposition S erzielt werden. Der Betätigungsaktuator kann in diesem Fall zeitlich hinterherlaufen. In einer weiteren Ausführungsform kann eine Bestromung des Koppelaktuators 78 als elektromechanische Wegfahrsperre benutzt werden. Hierbei würde ein Sensor an der Zündung dauerhaft ein P-Signal ausgeben, das es auch noch verhindert, die Kupplungen zu betätigen. Erst durch Lösen der elektromechanischen Wegfahrsperre im Bereich der Zündung könnte dieses P-Signal abgeschaltet werden, wodurch die Parksperre physisch ausgelegt werden kann, um die Wegfahrsperre aufzuheben.

Wenn der Betätigungsaktuator 70 wieder betriebsbereit ist, kann er das Aktuatorglied 72 in die Betätigungsposition in Betätigungsrichtung versetzen, was dazu führt, dass die Koppelvorspannfeder 82 das Aktuatorglied 72 wieder in die Betätigungsposition B versetzt, in der das Aktuatorglied 72 mit dem Betätigungshebel gekoppelt ist. Die Betätigungsposition B und die Halteposition H sind im Sinne der vorliegenden Anmeldung beides sogenannte Koppelpositionen K.

In Fällen, bei denen beispielsweise die Steuereinrichtung 36 ausfällt, kann es jedoch mit einem derart aktuatorisch betätigten Parksperrensystem 40 nicht möglich sein, die Sperrposition S einzulegen. Insbesondere wenn das Fahrzeug an einem Hang steht, kann das Fahrzeug dann ungewollt wegrollen. Zu diesem Zweck ist ein Nothebel 84 vorgesehen. Der Nothebel 84 ist um die Betätigungsachse 64 verschwenkbar und weist eine Entkoppelkontur 86 auf. Wenn der Nothebel 84 zwischen der in Fig. 1 in durchgezogenen Linien gezeigten Neutralposition N in eine Notsperrposition ES bewegt wird (in Fig. 1 gestrichelt angedeutet), hintergreift die Entkoppelkontur 86 des Nothebels 84 das Aktuatorglied 72 und drückt dieses gegen die Kraft der Koppelvorspannfeder 82 in die Entkoppelposition B. Zur rein mechanischen Betätigung des Nothebels 84 ist vorgesehen, dass dieser über eine Gehäuseöffnung 88 mit einem Schnittstellenhebel 90 gekoppelt ist, der entweder direkt zur mechanischen Betätigung des Nothebels 84 verwendbar ist, oder mit einem Notbetätigungsmechanismus 92 verwendbar ist, der beispielsweise in einem Fahrgastinnenraum oder dergleichen angeordnet ist.

Wenn das Parksperrensystem 40 wieder betriebsbereit ist, kann der Nothebel 84 wieder in die Neutralposition versetzt werden. Dann muss zunächst der Betätigungsaktuator 70 wieder angetrieben werden, um das Aktuatorglied 72 in Richtung der Betätigungsposition B zu bewegen, wo es durch die Koppelvorspannfeder 82 in die Betätigungsposition B gedrückt wird, und zwar parallel zur Koppelrichtung 80. Anschließend ist das Aktuatorglied wieder mit dem Betätigungshebel 62 gekoppelt, und das Parksperrensystem 40 kann wieder normal mittels des Betätigungsaktuators 70 betätigt werden.

In Fig. 1 ist ferner bei 96 schematisch eine Mitnehmereinrichtung 96 gezeigt, die den Nothebel 84 mit dem Betätigungshebel 62 auf eine solche Art und Weise koppelt, dass der Betätigungshebel 62 von dem Nothebel 84 in die Freigabewinkelposition FW bewegbar ist, indem der Nothebel 84 von der in Fig. 1 in durchgezogenen Linien gezeigten Neutralposition N in eine Notfreigabeposition EF verschwenkt wird (in Fig. 1 gestrichelt dargestellt).

Die Art der Kopplung kann beliebig gewählt werden. Sie kann beispielsweise durch ein Langloch in einem der zwei Hebel realisiert werden, und einen Stift, der mit dem anderen Hebel verbunden ist und in das Langloch greift, oder dergleichen. Bei der in Fig. 1 schematisch angedeuteten Konstruktion kann es hierbei notwendig sein, eine Drehrichtungsumkehr zu realisieren.

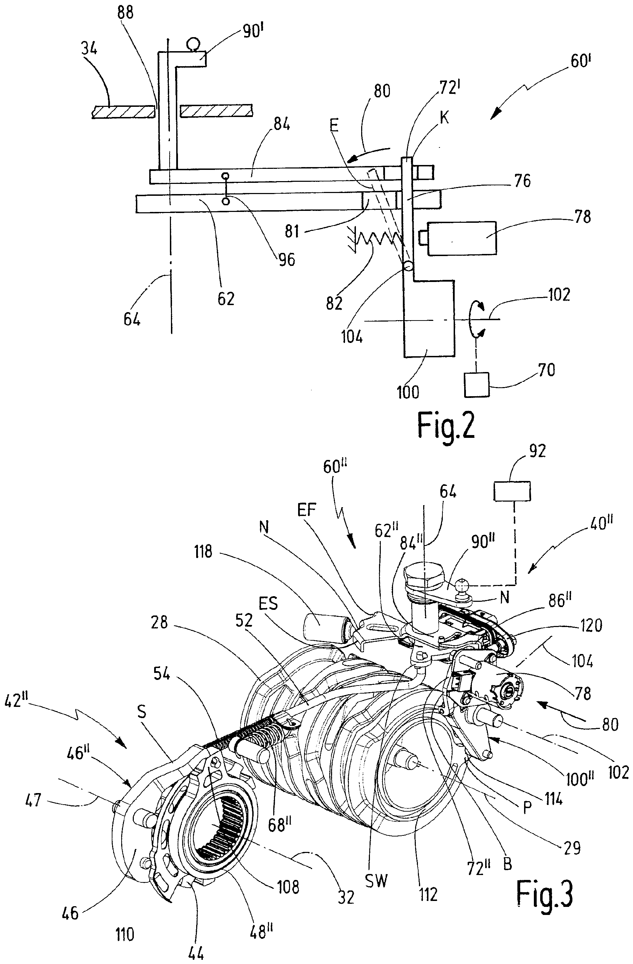

In den nachfolgenden Figuren 2 bis 15 sind weitere Ausführungsformen von Betätigungsmechanismen beschrieben, die hinsichtlich Aufbau und Funktionsweise generell dem Betätigungsmechanismus 60 der Fig. 1 entsprechen. Gleiche Elemente sind daher durch gleiche Bezugszeichen bezeichnet. Im Folgenden werden im Wesentlichen die Unterschiede erläutert.

Bei dem in Fig. 2 gezeigten Betätigungsmechanismus 60' ist gezeigt, dass der Nothebel 84 um die Betätigungsachse 64 verschwenkbar ist und mit einem Schnittstellenhebel 90' außerhalb des Gehäuses durch eine Öffnung 88 hindurch verbunden ist, wobei die Betätigungsachse 84 durch die Gehäuseöffnung 88 hindurch verläuft.

Ferner zeigt Fig. 2, dass der Betätigungsmechanismus 60' ein Drehglied 100 aufweist, das um eine Drehachse 102 verdrehbar ist. Die Drehachse 102 ist quer zu der Betätigungsachse 64 ausgerichtet. Das Drehglied 100 ist mittels des Betätigungsaktuators 70 in zwei Drehrichtungen verschwenkbar, wie es in Fig. 2 durch einen Pfeil angedeutet ist. Das Drehglied 100 kann zu diesem Zweck beispielsweise mit einem Nutfolger verbunden sein, der in eine Parksperrenkontur einer Schaltwalze 28 greift.

Fig. 2 zeigt ferner, dass das Aktuatorglied 72' über eine Koppelschwenkachse 104 drehfest, jedoch um die Koppelschwenkachse 104 verschwenkbar mit dem Drehglied 100 verbunden ist. Folglich kann das Aktuatorglied 72' durch ein Verschwenken um die Koppelschwenkachse 104 herum zwischen der Koppelposition K und der Entkoppelposition E bewegt werden, wie es in Fig. 2 durch einen Pfeil 80 angedeutet ist.

In den Fig. 3 bis 15 ist eine weitere Ausführungsform eines Betätigungsmechanismus 60" gezeigt, der hinsichtlich Aufbau und Funktionsweise generell dem Betätigungsmechanismus 60' der Fig. 2 entspricht. Gleiche Elemente sind daher durch gleiche Bezugszeichen gekennzeichnet. Im Folgenden werden im Wesentlichen die Unterschiede erläutert.

Fig. 3 zeigt zunächst einen bevorzugt verwendeten Sperrmechanismus 42". Hierbei ist die Parksperrenklinke 46 als zweiseitiger Hebel ausgebildet, der an einem Hebelende einen Sperrzahn zum Eingriff in eine Verzahnung des Parksperrenrades 44 aufweist, und an seinem anderen Hebelende einen Nockenbetätigungsabschnitt aufweist. Anstelle einer Ziehkeilanordnung wie in Fig. 1 weist der Sperrmechanismus 42" ein Nockenrad 48" auf, das koaxial zu der Welle 32 angeordnet ist, und zwar verdrehbar in Bezug auf das Parksperrenrad 44. An dem Nockenrad ist ein Nockenabschnitt 108 ausgebildet, der bei einem Verdrehen des Nockenrades den Nockenbetätigungsabschnitt der Parksperrenklinke 46 auslenkt, und zwar radial nach außen, um den Parksperrenzahn an dem anderen Hebelende radial nach innen auf die Parksperrenverzahnung zu zu bewegen.

Bei 110 ist ferner ein Arretierglied gezeigt, das dazu ausgelegt ist, die Parksperrenklinke 46 in der Freigabeposition (in Fig. 3 nicht gezeigt) zu arretieren, indem der Nockenbetätigungsabschnitt der Parksperrenklinke 46 auf dem Arretierabschnitt 110 zu liegen kommt. Das Aktuatorglied 110 ist vorzugsweise drehfest mit dem Nockenrad verbunden.

Das Nockenrad 48" ist ferner über ein Koppelglied 52 in Form einer Schubstange mit dem Betätigungshebel 62" gekoppelt, wobei in das Koppelglied 52 eine Einrückfeder 54 integriert ist. An dem Koppelglied 52 greift ferner eine Vorspannfeder 68" an, die - indirekt - den Betätigungshebel 62" in die Sperrwinkelposition SW vorspannt, die in Fig. 3 dargestellt ist.

Fig. 3 zeigt ferner eine Schaltwalze 28, an deren axialer Stirnseite eine Parksperrenkontur 112 vorgesehen ist. Die Parksperrenkontur ist so ausgebildet, dass ein Konturfolger 114, der mit dem Drehglied 100" verbunden ist, bei sämtlichen Drehbewegungen in der Halteposition verbleibt, beim Erreichen einer Parksperrendrehstellung der Schaltwalze 28 jedoch radial ausgelenkt wird. Dies führt zu einem Verschwenken des Drehgliedes 100" um die Drehachse 102 und folglich zu einem Verschwenken des Aktuatorgliedes 72 um die Drehachse 102, um hierdurch den Sperrmechanismus 42 zwischen der gezeigten Sperrposition S und einer Freigabeposition F zu bewegen.

Fig. 3 zeigt ferner einen gehäusefest angeordneten Koppelaktuator 78 in Form eines Elektromagnetaktuators, der dazu ausgebildet ist, auf das Aktuatorglied 72" zu wirken, das über eine Koppelschwenkachse 104 verschwenkbar mit dem Drehglied 100" verbunden ist. Das Drehglied 100" ist als zweiseitiger Hebel ausgebildet, wobei der Konturfolger 114 an dem einen Hebelende ausgebildet ist und wobei das Aktuatorglied 72" an dem anderen Hebelende des Drehgliedes 100" verschwenkbar angelenkt ist.

Der Nothebel 84" ist mit einem Ansatz verbunden, der mit einer Rasteinrichtung 118 zusammenwirkt, um auf diese Weise in die oben beschriebenen drei Positionen des Nothebels, nämlich N, ES und EF sicher einrasten zu können.

Ferner ist in Fig. 3 ein Drehsensor 120 zu erkennen, der dazu ausgebildet ist, die jeweilige Drehposition des Betätigungshebels 62" zu erkennen und an eine Steuereinrichtung 26 zu melden.

Die Funktionsweise des Betätigungsmechanismus 60" wird anhand der folgenden Figuren näher erläutert.

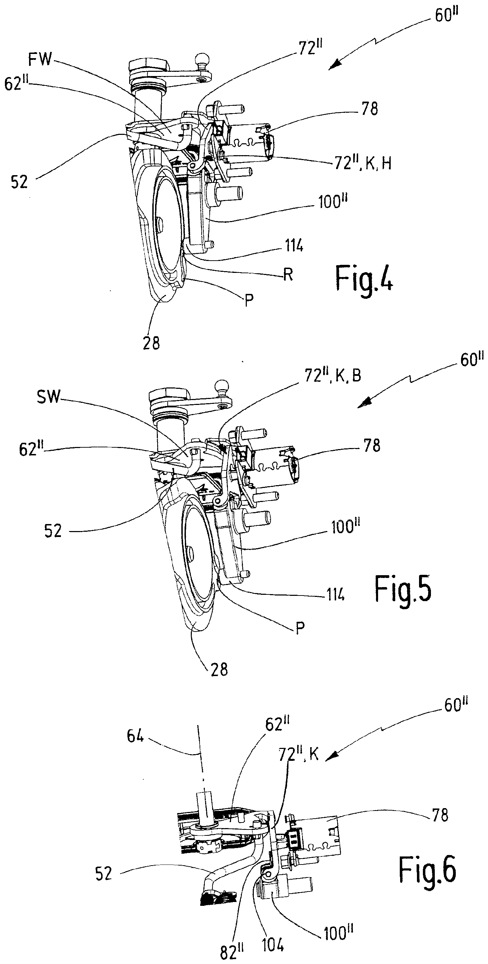

Fig. 4 zeigt einen Teil des Betätigungsmechanismus 60" in einer perspektivischen Darstellung in der Freigabewinkelposition FW, wobei sich das Aktuatorglied 72" in der Koppelposition befindet, genauer in der Halteposition H.

Fig. 5 zeigt in einer ähnlichen Ansicht das Aktuatorglied 72" in der Koppelposition K, genauer in der Betätigungsposition H, derart, dass das Parksperrensystem 40 sich in der Sperrposition S befindet.

Es ist aus den Fig. 4 und 5 zu erkennen, dass in der Halteposition H des Aktuatorgliedes 72" sich der Konturfolger 114 auf einer Kreisbahn der Parksperrenkontur befindet, in der Betätigungsposition B sich der Konturfolger 114 jedoch in einer gegenüber der Kreisbahn ausgelenkten Parkposition befindet (P in Fig. 5).

Fig. 6 zeigt eine abgewandelte Darstellung des Betätigungsmechanismus 60", aus der zu erkennen ist, wie das Aktuatorglied 72" in der Koppelposition K mit dem Betätigungshebel 62" zusammenwirkt.

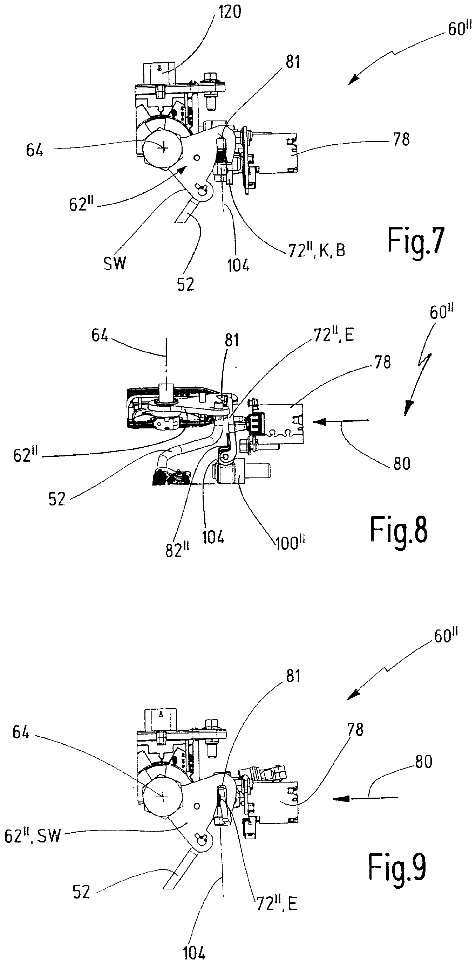

Fig. 7 zeigt eine vergleichbare Ansicht, jedoch in einer etwa um 90° versetzten Darstellung. Das Aktuatorglied 72" befindet sich in der Koppelposition K, und hier genauer in der Betätigungsposition B, so dass der Zustand im Wesentlichen der Fig. 5 entspricht.

Fig. 8 zeigt, wie das Aktuatorglied 72" mittels des Koppelaktuators 78 um die Koppelschwenkachse 104 herum verschwenkt werden kann, derart, dass es von dem Betätigungshebel 62" entkoppelt wird und in die Ausnehmung 81 eintritt, wenn der Betätigungshebel 62" durch die Vorspannfeder 68" in die Sperrwinkelposition SW bewegt wird.

Fig. 9 zeigt einen ähnlichen Zustand des Betätigungsmechanismus 60", jedoch in einer gegenüber der Fig. 8 um etwa 90° versetzten Darstellung, nämlich axial auf die Betätigungsachse 84 zu.

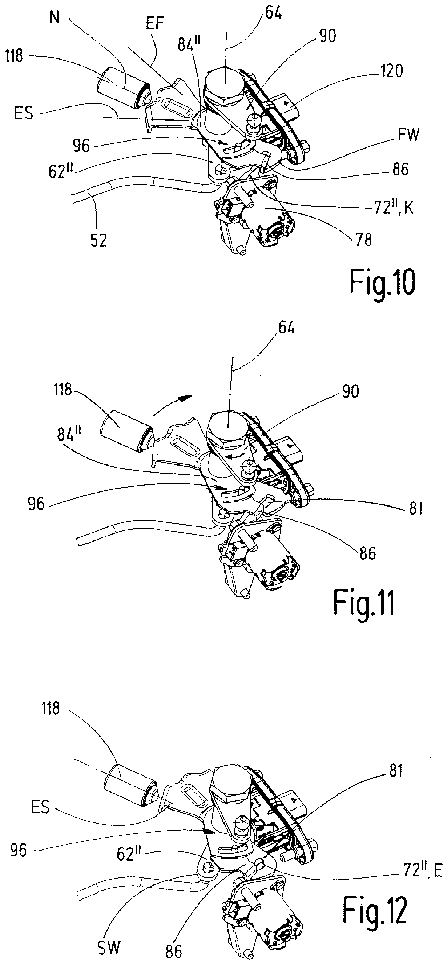

Anhand der Fig. 10 bis 12 wird nunmehr erläutert, wie sich der Betätigungsmechanismus durch Betätigen eines Notbetätigungsmechanismus unabhängig von dem Schaltwalzenaktuator 28, 70 und unabhängig von dem Koppelaktuator 78 in die Sperrposition bringen lässt.

Hierzu wird der Nothebel 84" über den Schnittstellenhebel 90 (der außerhalb des Gehäuses liegt) verdreht, und zwar von der in Fig. 10 gezeigten Neutralposition N über die Zwischenposition in Fig. 11 in die in Fig. 12 gezeigte Nutsperrposition ES. Es ist zu erkennen, dass hierbei die Entkoppelkontur 86 des Nothebels 84" so an dem Aktuatorglied 72" angreift, so dass dieses von der in Fig. 10 gezeigten Koppelposition K in die in Fig. 12 gezeigte Entkoppelposition E versetzt wird, was dazu führt, dass der Betätigungshebel 62 durch die Vorspannfeder 68" in die Sperrwinkelposition SW versetzt wird.

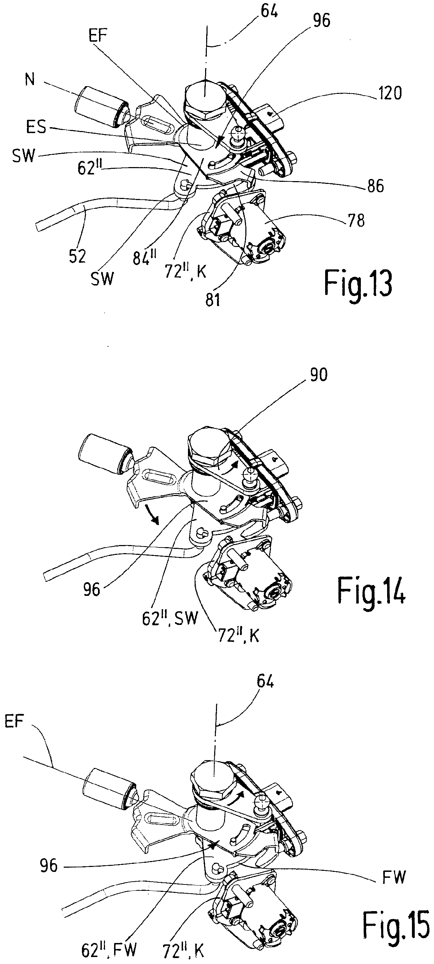

In den Fig. 13 bis 15 ist der umgekehrte Vorgang gezeigt, nämlich das Notentriegeln des Parksperrensystems. Hierbei wird der Nothebel 84" mittels des Schnittstellenhebels 90 aus der in Fig. 13 gezeigten Neutralposition N in der entgegengesetzten Richtung in eine Nutfreigabeposition ES verschwenkt (siehe Fig. 15), wobei der Zwischenzustand in Fig. 14 gezeigt ist.

Hierbei wirkt eine Mitnehmereinrichtung 96, die einen mit dem Betätigungshebel 62 verbundenen Stift aufweist, der in ein Langloch des Nothebels 84" greift, so dass der Betätigungshebel bei einer Verdrehung in Richtung der Nutfreigabeposition ES mitgenommen wird, und zwar von der in Fig. 13 gezeigten Sperrwinkelposition SW in die in Fig. 15 gezeigte Freigabewinkelposition FW.

Bei dem Vorgang des Entriegelns bleibt das Arretierglied 72" generell in der Koppelposition K.

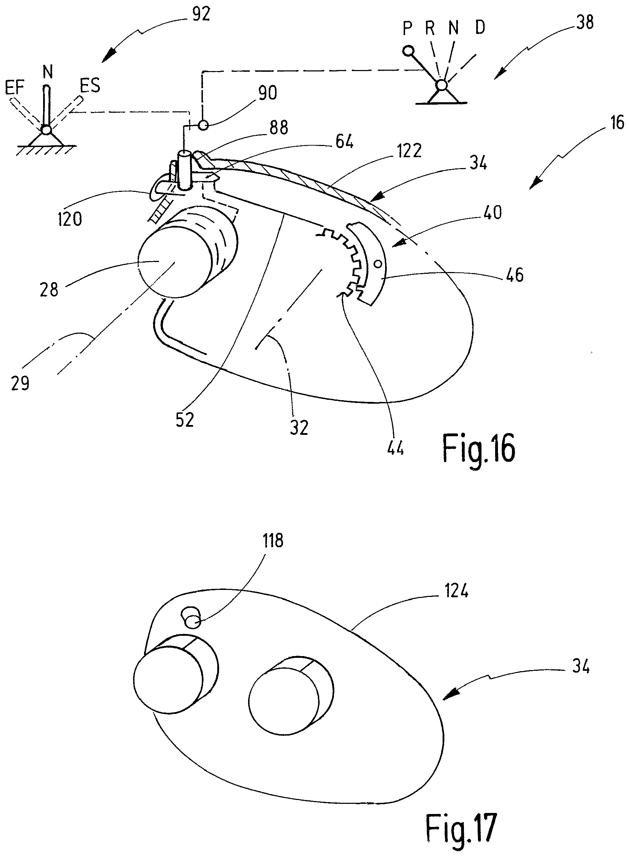

In den Fig. 16 und 17 ist gezeigt, dass sich das gezeigte Parksperrensystem 40 in idealer Weise dazu eignet, ein modulares Kraftfahrzeuggetriebesystem einzurichten.

Fig. 16 zeigt schematisch zum einen den Sperrmechanismus 40, der einer Ausgangswelle 32 des Stufengetriebes 16 zugeordnet ist, und den Betätigungshebel 62, der in der Nachbarschaft zu einer Schaltwalze 28 angeordnet ist, die parallel zu der Ausgangswelle 32 versetzt angeordnet ist. Der Betätigungshebel 64 ist ferner in der Nachbarschaft zu einer Innenseite eines ersten Gehäusesteils 112 des Getriebegehäuses 34 angeordnet. Die Betätigungsachse 64 erstreckt sich durch eine Öffnung 88 in den ersten Teil 122 hindurch.

Der Drehsensor 120 kann hierbei sich ebenfalls mit einem Gehäuseabschnitt durch das erste Gehäuseteil 122 hindurch erstrecken.

Der in Fig. 16 gezeigte Schnittstellenhebel 90 kann entweder mit einem Gangschalthebel 38 verbunden werden. In diesem Fall kann das Parksperrensystem rein manuell betätigt werden. Es ist hierbei nicht notwendig, den Betätigungshebel 62 auf irgendeine Art und Weise mit der Schaltwalze 28 zu koppeln. Diese dient in diesem Fall ausschließlich zum Ein- und Auslegen von Gangstufen des Getriebes.

In einer weiteren Variante könnte auch auf die Schaltwalze 28 verzichtet werden, so dass das Getriebe 16 als manuelles Handschaltgetriebe ausgebildet ist.

In einer alternativen Variante ist jedoch der Betätigungshebel 64 auf eine Art und Weise, wie sie beispielsweise in den Fig. 2 bis 15 beschrieben ist, mit der Schaltwalze 28 gekoppelt und wird folglich durch diesen Aktuator betätigt. In diesem Fall kann der Schnittstellenhebel 90 mit einem Notbetätigungsmechanismus 92 außerhalb des Getriebegehäuses 34 verbunden sein, um einen für diesen Fall zusätzlich vorgesehenen Nothebel 84, der im Inneren des Getriebegehäuses angeordnet ist, zwischen einer Neutralposition und einer Notsperrposition ES, und ggf. einer Notfreigabeposition ES zu bewegen.

Der gleiche Gehäusetyp 84 kann für beide Varianten von Stufengetrieben 16 verwendet werden.

Fig. 17 zeigt ein weiteres Gehäuseteil 124, das eine Ausnehmung aufweist, in die die Rasteinrichtung 118 eingesetzt werden kann.

Bei der Variante mit Notbetätigung kann die Rasteinrichtung 118 dazu dienen, den Nothebel 84 zwischen den drei Positionen N, ES, EF sicher einzurasten. In der manuellen Getriebevariante kann die Rasteinrichtung 118 dazu vorgesehen sein, um die unterschiedlichen Schalthebelstufen P, R, N, D einzurasten.

## Patentansprüche

1. Parksperrensystem (40) für ein Kraftfahrzeuggetriebe (16), mit
- einem Gehäuse (34),
- einem Sperrmechanismus (42), der dazu ausgebildet ist, in einer Sperrposition (S) eine Welle (34) in Bezug auf das Gehäuse (34) festzulegen und in einer Freigabeposition (F) die Welle (32) freizugeben,
- einem Betätigungsmechanismus (60) zum Betätigen des Sperrmechanismus (42), wobei der Betätigungsmechanismus (60) einen um eine gehäusefeste Betätigungsachse (64) zwischen einer Sperrwinkelposition (SW),
wobei sich hierbei der Sperrmechanismus (42) in der Sperrposition (S) befindet, und einer Freigabewinkelposition (FW), wobei sich hierbei der Sperrmechanismus (42) in der Freigabeposition (F) befindet, verschwenkbaren Betätigungshebel (62) aufweist, der mit dem Sperrmechanismus (42) zwangsgekoppelt ist, wobei der Betätigungshebel (62) in Richtung der Sperrwinkelposition (SW) vorgespannt ist, wobei ein Aktuatorglied (72) mittels eines Aktuators in einer Betätigungsrichtung zwischen einer Halteposition, in der das Aktuatorglied den Betätigungshebel (62) in der Freigabewinkelposition (FW) hält, und einer Betätigungsposition (B), in der der Betätigungshebel (62) dem Aktuatorglied (72) gefolgt ist und der Sperrmechanismus (42) in die Sperrposition (S) versetzt worden ist, bewegbar ist,
**dadurch gekennzeichnet, dass** das Aktuatorglied (72) in einer Koppelrichtung (80) zwischen einer Koppelposition (K), in der das Aktuatorglied (72) mit dem Betätigungshebel (62) gekoppelt ist, und einer Entkoppelposition (E) bewegbar ist, in der Aktuatorglied (72) von dem Betätigungshebel (62) entkoppelt ist, wobei die Koppelrichtung (80) quer zu der Betätigungsrichtung (74) verläuft.

2. Parksperrensystem nach Anspruch 1, **dadurch gekennzeichnet, dass** das Aktuatorglied (72) mittels eines Nothebels (84) von der Koppelposition (K) in die Entkoppelposition (E) bewegbar ist, indem der Nothebel (84) von einer Neutralposition (N) in eine Notsperrposition (ES) verschwenkt wird.

3. Parksperrensystem nach Anspruch 1 oder 2, **dadurch gekennzeichnet, dass** ein Nothebel (84) mit dem Betätigungshebel (62) über eine Mitnehmereinrichtung (96) gekoppelt ist, derart, dass der Betätigungshebel (62) von dem Nothebel (84) in die Freigabewinkelposition (FW) bewegbar ist, indem der Nothebel (84) von einer Neutralposition (N) in eine Notfreigabeposition (EF) verschwenkt wird.

4. Parksperrensystem nach Anspruch 2 oder 3, **dadurch gekennzeichnet, dass** der Nothebel (84) um die Betätigungsachse (64) verschwenkbar ist.

5. Parksperrensystem nach einem der Ansprüche 2 - 4, **dadurch gekennzeichnet, dass** der Nothebel (84) über eine Gehäuseöffnung (88) mit einem Schnittstellenhebel (90) verbunden ist, der an der Außenseite des Gehäuses (34) mit einem Notbetätigungsmechanismus (92) verbindbar ist.

6. Parksperrensystem nach einem der Ansprüche 1 - 5, **dadurch gekennzeichnet, dass** das Aktuatorglied (72) mittels eines Elektromagnetaktuators (78) von der Koppelposition (K) in die Entkoppelposition (E) bewegbar ist.

7. Parksperrensystem nach einem der Ansprüche 1 - 6, **dadurch gekennzeichnet, dass** das Aktuatorglied (72) in die Koppelposition (K) vorgespannt ist.

8. Parksperrensystem nach einem der Ansprüche 1 - 7, **dadurch gekennzeichnet, dass** der Aktuator (70) dazu ausgebildet ist, ein Drehglied (100) um eine Drehachse (102) zu verschwenken, wobei das Aktuatorglied (72) mit dem Drehglied (100) drehgekoppelt ist und einen Betätigungsabschnitt (76) aufweist, der in der Koppelposition (K) an dem Betätigungshebel (62) anliegt.

9. Parksperrensystem nach Anspruch 8, **dadurch gekennzeichnet, dass** das Aktuatorglied (72) an dem Drehglied (100) um eine Koppelschwenkachse (104) verschwenkbar gelagert ist, die windschief zu der Drehachse (102) des Drehgliedes (100) ausgerichtet ist.

10. Parksperrensystem nach einem der Ansprüche 1 - 9, **dadurch gekennzeichnet, dass** der Aktuator (70) eine Schaltwalze (28) aufweist, die eine Parksperrenkontur (112) aufweist, in die ein Konturfolger (114) eingreift, der mit dem Aktuatorglied (72) gekoppelt ist.

11. Parksperrensystem nach Anspruch 10, **dadurch gekennzeichnet, dass** der Konturfolger (114) an einem Drehglied (100) ausgebildet ist, das um eine Drehachse (102) verschwenkbar ist und an dem das Aktuatorglied (72) gelagert ist.

12. Modulares Kraftfahrzeuggetriebe (16) mit einem Parksperrensystem (40) nach einem der Ansprüche 1 - 11, mit einem Getriebegehäuse (34), innerhalb dessen die Welle (32) des Parksperrensystems (40) gelagert ist, wobei ein Betätigungshebel (62) in Nachbarschaft zu einer Innenseite des Getriebegehäuses (34) angeordnet und um eine Betätigungsachse (64) verschwenkbar ist, wobei das Getriebegehäuse (34) eine Gehäuseöffnung (88) aufweist, durch die sich die Betätigungsachse (64) erstreckt, derart, dass der Betätigungshebel (62) in einer Variante des Kraftfahrzeuggetriebes (16) über die Gehäuseöffnung (88) mit einem Schnittstellenhebel (90) verbunden ist, der an der Außenseite des Getriebegehäuses (34) mit einem handbetätigten Schalthebel (38) verbunden ist, und in einer weiteren Variante mit einem um die Betätigungsachse (64) verdrehbaren Nothebel (84) gekoppelt ist, der über die Gehäuseöffnung (88) mit einem Schnittsteilenhebel (90) verbunden ist, der an der Außenseite des Getriebegehäuses (34) mit einem Notbetätigungsmechanismus (92) verbunden ist.

## Claims

1. Parking lock system (40) for a motor vehicle transmission (16), having
- a housing (34),
- a locking mechanism (42), which is designed to fix a shaft (34) in relation to the housing (34) in a locking position (S) and to release the shaft (32) in a release position (F),
- an actuating mechanism (60) for actuating the locking mechanism (42), wherein the actuating mechanism (60) has an actuating lever (62) which can be pivoted about an actuating axis (64) fixed in relation to the housing, between a locking angle position (SW), wherein here the locking mechanism (42) is in the locking position (S), and a release angle position (FW), wherein here the locking mechanism (42) is in the release position (F), and is positively coupled to the locking mechanism (42),
wherein the actuating lever (62) is preloaded in the direction of the locking angle position (SW), wherein an actuator member (72) can be moved in an actuating direction by means of an actuator between a holding position, in which the actuator member holds the actuating lever (62) in the release angle position (FW), and an actuating position (B), in which the actuating lever (62) follows the actuator member (72) and the locking mechanism (42) has been moved into the locking position (S), **characterized in that** the actuator member (72) can be moved in a coupling direction (80) between a coupling position (K), in which the actuator member (72) is coupled to the actuating lever (62), and a decoupling position (E), in which the actuator member (72) is decoupled from the actuating lever (62), wherein the coupling direction (80) runs transversely to the actuating direction (74).

2. Parking lock system according to Claim 1, **characterized in that** the actuator member (72) can be moved by means of an emergency lever (84) from the coupling position (K) into the decoupling position (E) by pivoting the emergency lever (84) from a neutral position (N) into an emergency locking position (ES).

3. Parking lock system according to Claim 1 or 2, **characterized in that** an emergency lever (84) is coupled to the actuating lever (62) by means of a catch device (96), such that the actuating lever (62) can be moved by the emergency lever (84) into the release angle position (FW) by pivoting the emergency lever (84) from a neutral position (N) into an emergency release position (EF).

4. Parking lock system according to Claim 2 or 3, **characterized in that** the emergency lever (84) can be pivoted about the actuating axis (64).

5. Parking lock system according to one of Claims 2-4, **characterized in that** the emergency lever (84) is connected via a housing opening (88) to an interface lever (90), which can be connected on the outside of the housing (34) to an emergency actuating mechanism (92).

6. Parking lock system according to one of Claims 1-5, **characterized in that** the actuator member (72) can be moved from the coupling position (K) into the decoupling position (E) by means of an electromagnetic actuator (78).

7. Parking lock system according to one of Claims 1-6, **characterized in that** the actuator member (72) is preloaded into the coupling position (K).

8. Parking lock system according to one of Claims 1-7, **characterized in that** the actuator (70) is designed to pivot a rotary member (100) about an axis (102) of rotation, wherein the actuator member (72) is rotationally coupled to the rotary member (100) and has an actuating portion (76) which rests on the actuating lever (62) in the coupling position (K).

9. Parking lock system according to Claim 8, **characterized in that** the actuator member (72) is mounted on the rotary member (100) so as to be pivotable about a coupling pivoting axis (104) which is aligned askew relative to the axis (102) of rotation of the rotary member (100).

10. Parking lock system according to one of Claims 1-9, **characterized in that** the actuator (70) has a selector drum (28), which has a parking lock contour (112) into which a contour follower (114) coupled to the actuator member (72) engages.

11. Parking lock system according to Claim 10, **characterized in that** the contour follower (114) is formed on a rotary member (100) which is pivotable about an axis (102) of rotation and on which the actuator member (72) is mounted.

12. Modular motor vehicle transmission (16) having a parking lock system (40) according to one of Claims 1-11, having a transmission housing (34), within which the shaft (32) of the parking lock system (40) is mounted, wherein an actuating lever (62) is arranged in the vicinity of an inner side of the transmission housing (34) and can be pivoted about an actuating axis (64), wherein the transmission housing (34) has a housing opening (88), through which the actuating axis (64) extends, such that, in one variant of the motor vehicle transmission (16), the actuating lever (62) is connected via the housing opening (88) to an interface lever (90), which is connected on the outside of the transmission housing (34) to a manually actuated shift lever (38), and, in a further variant, is coupled to an emergency lever (84), which can be turned about the actuating axis (64) and is connected via the housing opening (88) to an interface lever (90), which is connected on the outside of the transmission housing (34) to an emergency actuating mechanism (92).

## Revendications

1. Système de frein de stationnement (40) pour une boîte de vitesses de véhicule automobile (16), avec
- un boîtier (34),
- un mécanisme de blocage (42), qui est conçu pour immobiliser un arbre (34) par rapport au boîtier (34) dans une position de blocage (S) et libérer l'arbre (32) dans une position de libération (F),
- un mécanisme d'actionnement (60) pour actionner le mécanisme de blocage (42), dans lequel le mécanisme d'actionnement (60) présente un levier d'actionnement (62) pouvant pivoter autour d'un axe d'actionnement (64) fixe par rapport au boîtier entre une position angulaire de blocage (SW), dans laquelle le mécanisme de blocage (42) se trouve ainsi dans la position de blocage (S), et une position angulaire de libération (FW), dans laquelle le mécanisme de blocage (42) se trouve ainsi dans la position de libération (F), et qui est en couplage forcé avec le mécanisme de blocage (42),
dans lequel le levier d'actionnement (62) est précontraint en direction de la position angulaire de blocage (SW), dans lequel un organe d'actionneur (72) est déplaçable au moyen d'un actionneur dans une direction d'actionnement entre une position de maintien, dans laquelle l'organe d'actionneur maintient le levier d'actionnement (62) dans la position angulaire de libération (FW) et une position d'actionnement (B), dans laquelle le levier d'actionnement (62) a suivi l'organe d'actionneur (72) et le mécanisme de blocage (42) a été déplacé dans la position de blocage (S),
**caractérisé en ce que** l'organe d'actionneur (72) est déplaçable dans une direction de couplage (80) entre une position de couplage (K), dans laquelle l'organe d'actionneur (72) est couplé avec le levier d'actionneur (62), et une position de découplage (E), dans laquelle l'organe d'actionneur (72) est découplé du levier d'actionnement (62), dans lequel la direction de couplage (80) est transversale à la direction d'actionnement (74).

2. Système de frein de stationnement selon la revendication 1, **caractérisé en ce que** l'organe d'actionneur (72) est déplaçable au moyen d'un levier de secours (84) de la position de couplage (K) à la position de découplage (E), par le fait que l'on fait pivoter le levier de secours (84) d'une position neutre (N) à une position de blocage de secours (ES).

3. Système de frein de stationnement selon la revendication 1 ou 2, **caractérisé en ce qu'**un levier de secours (84) est couplé au levier d'actionnement (62) par un dispositif d'entraînement (96), de telle manière que le levier d'actionnement (62) soit déplaçable par le levier de secours (84) dans la position angulaire de libération (FW), par le fait que le levier de secours (84) est basculé d'une position neutre (N) à une position de libération de secours (EF).

4. Système de frein de stationnement selon la revendication 2 ou 3, **caractérisé en ce que** le levier de secours (84) peut pivoter autour de l'axe d'actionnement (64).

5. Système de frein de stationnement selon l'une quelconque des revendications 2 à 4, **caractérisé en ce que** le levier de secours (84) est relié par une ouverture de boîtier (88) à un levier d'interface (90), qui peut être relié sur le côté extérieur du boîtier (34) à un mécanisme d'actionnement de secours (92).

6. Système de frein de stationnement selon l'une quelconque des revendications 1 à 5, **caractérisé en ce que** l'organe d'actionneur (72) est déplaçable de la position de couplage (K) à la position de découplage (E) au moyen d'un actionneur électromagnétique (78).

7. Système de frein de stationnement selon l'une quelconque des revendications 1 à 6, **caractérisé en ce que** l'organe d'actionneur (72) est précontraint dans la position de couplage (K).

8. Système de frein de stationnement selon l'une quelconque des revendications 1 à 7, **caractérisé en ce que** l'actionneur (70) est conçu pour faire pivoter un organe rotatif (100) autour d'un axe de rotation (102), dans lequel l'organe d'actionneur (72) est couplé en rotation avec l'organe rotatif (100) et présente une section d'actionnement (76), qui s'applique dans la position de couplage (K) sur le levier d'actionnement (62).

9. Système de frein de stationnement selon la revendication 8, **caractérisé en ce que** l'organe d'actionneur (72) est monté sur l'organe rotatif (100) de façon pivotante autour d'un axe de pivotement de couplage (104), qui est orienté de façon gauche par rapport à l'axe de rotation (102) de l'organe rotatif (100).

10. Système de frein de stationnement selon l'une quelconque des revendications 1 à 9, **caractérisé en ce que** l'actionneur (70) présente un cylindre de commutation (28), qui présente un contour de frein de stationnement (112), dans lequel s'engage un suiveur de contour (114), qui est couplé à l'organe d'actionneur (72).

11. Système de frein de stationnement selon la revendication 10, **caractérisé en ce que** le suiveur de contour (114) est formé sur un organe rotatif (100), qui peut pivoter autour d'un axe de rotation (102) et sur lequel l'organe d'actionneur (72) est monté.

12. Boîte de vitesses modulaire (16) de véhicule automobile avec un système de frein de stationnement (40) selon l'une quelconque des revendications 1 à 11, avec un boîtier de boîte de vitesses (34), à l'intérieur duquel l'arbre (32) du système de frein de stationnement (40) est monté, dans laquelle un levier d'actionnement (62) est disposé à proximité d'un côté intérieur du boîtier de boîte de vitesses (34) et peut pivoter autour d'un axe d'actionnement (64), dans lequel le boîtier de boîte de vitesses (34) présente une ouverture de boîtier (88), à travers laquelle l'axe d'actionnement (64) s'étend de telle manière que le levier d'actionnement (62) soit relié, dans une variante de la boîte de vitesses de véhicule automobile (16), par l'ouverture de boîtier (88) à un levier d'interface (90), qui est relié sur le côté extérieur du boîtier de boîte de vitesses (34) à un levier de changement de vitesse (38) actionné à la main, et dans une autre variante est couplé à un levier de secours (84) pouvant tourner autour de l'axe d'actionnement (64), qui est relié par l'ouverture de boîtier (88) à un levier d'interface (90), qui est relié sur le côté extérieur du boîtier de boîte de vitesses (34) à un mécanisme d'actionnement de secours (92).
